# DEMANDE DE BREVET EUROPEEN

(11) **EP 3 656 222 A1**
(43) Date de publication de la demande: **27.05.2020**
(21) Numéro de dépôt: 19209322.7
(22) Date de dépôt: 15.11.2019
(51) Int. Cl.: A23G 3/02, A23P 30/34, A23G 3/34

(54) **PROCÉDÉ ET DISPOSITIF DE FABRICATION D'UNE MERINGUE**

(30) Priorité: 22.11.2018 FR 1871690
(71) Demandeur: Biscuiterie Fine de France, 46090 Le Montat (FR)
(72) Inventeur: ROBERT, Pierre-Etienne, 46000 CAHORS (FR)
(74) Mandataire: Godard, Xavier

(57) **Abrégé**

L'invention concerne un procédé de fabrication d'une meringue comprenant les opérations suivantes :
- préparation d'une pâte à meringue,
- extrusion des meringues crues (M) en forme de goutte sur une tôle support (100),
- cuisson des meringues.

Ce procédé est remarquable en ce qu'il comprend avant cuisson, une opération d'aplatissement des meringues crues (M) extrudées au moyen d'une tôle de pressage (200) à des fins de création sur les meringues d'une surface plane supérieure.

L'invention concerne également le dispositif permettant de mettre en œuvre le procédé et la meringue obtenue.

Applications : fabrication des meringues.

## Description

### DOMAINE D'APPLICATION DE L'INVENTION

La présente invention a trait au domaine de la fabrication des meringues et notamment aux adaptations permettant de réaliser dans les meilleures conditions une surface plane sur ces dernières.

### DESCRIPTION DE L'ART ANTÉRIEUR

Pour des raisons d'encombrement mais également afin d'en faciliter la manipulation et la manutention notamment par des moyens industriels, il peut être utile de préformer les meringues d'une surface plane en sus de celle constituée par leur base.

Un procédé connu consiste à scier le haut de la meringue cuite parallèlement à sa base. Si une telle solution répond au besoin en ce qui concerne l'encombrement, elle ne permet pas une saisie de la meringue au niveau de cette nouvelle surface par des moyens tels des ventouses industrielles.

Il existe également des procédés permettant de mouler des préparations pâtissières mais ils requièrent une matrice ou un moule.

Ils peuvent également requérir un changement de composition de la préparation, ce qui peut la faire sortir selon les législations, des critères autorisant l'utilisation du nom « meringue ».

### BREVE DESCRIPTION DE L'INVENTION

Partant de cet état de fait, la demanderesse a mené des recherches visant à proposer une solution optimisée de réalisation d'une meringue avec une surface plane en sus de celle constituant sa base.

Ces recherches ont abouti à la conception et à la réalisation d'un procédé de fabrication d'une meringue comprenant les opérations suivantes :
- préparation d'une pâte à meringue,
- extrusion des meringues crues en forme de goutte sur une tôle support,
- cuisson des meringues.

Ce procédé est remarquable en ce qu'il comprend avant cuisson, une opération d'aplatissement des meringues crues extrudées au moyen d'une tôle de pressage à des fins de création sur les meringues d'une surface plane supérieure.

Ce procédé consiste à aplatir les meringues avant cuisson. Il créé une deuxième surface plane venant en vis-à-vis de celle constituée par la base de la meringue extrudée déjà créée par l'extrusion de la pâte sur une surface plane. Ce procédé ne nécessite pas la présence d'un moule.

Le résultat obtenu est donc une meringue aplatie pouvant après cuisson, être saisie par des moyens de manutention industriels telles des ventouses sur la nouvelle surface plane créée.

La demanderesse a constaté que la meringue crue c'est-à-dire non cuite peut coller à la surface venant l'aplatir ce qui rend l'opération d'aplatissement difficilement reproductible de façon industrielle sans prévoir avant l'opération d'aplatissement, une opération supplémentaire de nettoyage de la surface venant en contact avec la meringue.

La demanderesse a donc mené des recherches visant à proposer une solution évitant ledit nettoyage.

Ainsi, selon une autre caractéristique particulièrement avantageuse de l'invention, le nouveau procédé consiste, avant aplatissement, à intercaler un matériau antiadhésif entre la tôle de pressage et les meringues crues extrudées.

Cette solution a pour avantage d'éviter l'adhérence de la meringue à la surface plane et/ou de faciliter l'évacuation de la matière intercalaire après chaque aplatissement ou lorsque cela est jugé nécessaire.

Deux mises en œuvre de ce procédé ont pour l'instant été conçues. Elles sont décrites ci-dessous.

Selon une autre caractéristique particulièrement avantageuse de l'invention constituant une première mise en oeuvre, le matériau intercalé est du papier dit de cuisson.

Ainsi, après avoir fabriqué une pâte à meringue, les meringues crues sont extrudées en forme de goutte sur du papier cuisson qui se trouve sur une tôle. A la suite de quoi, une nouvelle feuille de papier cuisson est disposée sur les meringues crues, qui sont ensuite aplaties par un dispositif mécanique. La surface d'aplatissement est constituée par une tôle, disposée parallèlement à la tôle sur laquelle sont extrudées les meringues crues, qui vient se superposer dessus, afin d'écraser les meringues crues.

La cuisson de la meringue intervient donc une fois cette opération réalisée.

Selon une autre caractéristique particulièrement avantageuse de l'invention, lors de la cuisson, le papier dit de cuisson est laissé en position sur les meringues crues aplaties. La cuisson de la meringue qui se retrouve entre les deux feuilles de papier, intervient donc une fois cette opération réalisée. Une fois que les meringues sont cuites, les feuilles de cuisson inférieure et supérieure sont retirées.

Selon une autre caractéristique particulièrement avantageuse de l'invention constituant une autre mise en œuvre, le matériau intercalé est un film d'eau.

Selon une caractéristique non limitative, cette humidification est réalisée par pulvérisation du film d'eau sous forme de brouillard.

Cette étape d'humidification peut être réalisée selon plusieurs solutions notamment celle décrite ci-dessous.

Selon une autre caractéristique particulièrement avantageuse de l'invention, l'eau est pulvérisée directement sur la surface de la tôle de pressage venant en contact avec les meringues crues extrudées. Ainsi, après avoir fabriqué une pâte à meringue, les meringues crues sont extrudées en forme de goutte sur du papier cuisson qui se trouve sur une tôle. La surface d'aplatissement est ensuite humidifiée avant pressage. Puis il y a l'étape d'aplatissement des meringues crues par la tôle de pressage disposée parallèlement à la tôle sur laquelle se trouvent les meringues crues, qui vient se superposer dessus, afin d'écraser les meringues crues. Cette deuxième tôle rentre donc directement en contact avec la meringue crue. Celle-ci est donc constamment humidifiée avec un spray d'eau empêchant ainsi la meringue crue de coller à la tôle.

Selon une autre caractéristique, l'eau est pulvérisée directement sur les meringues crues extrudées.

La cuisson de la meringue intervient donc une fois cette opération réalisée. Cela n'affecte pas les caractéristiques de la meringue.

L'invention concerne également le dispositif permettant de mettre en œuvre le procédé de l'invention.

Ce dispositif permettant de mettre en œuvre un procédé de fabrication de meringue comprenant les opérations suivantes :
- préparation d'une pâte à meringue,
- extrusion des meringues crues en forme de goutte sur une tôle support,
- cuisson des meringues,
est remarquable en ce qu'il adopte une architecture de presse comprenant une tôle de pressage sous laquelle vient se positionner la tôle support supportant des meringues crues extrudées en goutte,
le dispositif comprenant un moyen assurant la mise en mouvement de la tôle de pressage vers la tôle support à des fins d'aplatissement des meringues crues.

Selon une autre caractéristique particulièrement avantageuse de l'invention, le dispositif est remarquable en ce qu'il comprend une zone de stockage de feuilles de papier cuisson à usage unique prédécoupées, dimensionnées pour être disposées sur les meringues crues extrudées et s'interposer entre les meringues crues et la tôle de pressage.

Selon une autre caractéristique particulièrement avantageuse de l'invention, le dispositif comprend un dispositif d'enroulement d'une feuille de papier cuisson qui est déroulée pour s'interposer entre les meringues crues et la tôle de pressage.

Selon une autre caractéristique particulièrement avantageuse de l'invention, le dispositif est remarquable en ce qu'il comprend un moyen de pulvérisation d'eau orienté vers la surface inférieure de la tôle de pressage pulvérisant l'eau sur ladite surface pour que le film d'eau créé vienne s'interposer entre les meringues crues et la tôle de pressage. Cette pulvérisation peut être réalisée selon plusieurs tailles de gouttelettes d'eau incluant ainsi notamment les projections désignées sous les appellations brumisation ou production de brouillard.

Comme expliqué plus haut, selon une autre caractéristique particulièrement avantageuse de l'invention, le dispositif comprend un moyen de pulvérisation d'eau orienté vers les meringues crues pulvérisant l'eau sur lesdites meringues crues pour que le film d'eau créé vienne s'interposer entre les meringues crues et la tôle de pressage.

Selon une autre caractéristique particulièrement avantageuse de l'invention, un moyen de convoyage déplace la tôle support entre les différents postes suivants :
- extrusion,
- aplatissement,
- cuisson.

L'invention concerne également la meringue cuite obtenue selon ce procédé qui présente deux faces aplaties lisses disposées en vis-à-vis.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif, deux modes de réalisation d'un procédé et d'un dispositif conformes à l'invention.

### Brève description des dessins

La figure 1 est un dessin schématique d'une vue de profil des différentes étapes du procédé de l'invention selon une première mise en œuvre par feuille de cuisson intercalaire,
La figure 2 est un dessin schématique d'une vue de profil des différentes étapes du procédé de l'invention selon une première mise en œuvre par film d'eau intercalaire.

### DESCRIPTION DES MODES PRÉFÉRÉS DE RÉALISATION

Les deux figures illustrent les différentes opérations liées aux caractéristiques de l'invention basées sur l'aplatissement des meringues crues.

Ces figures n'illustrent pas les opérations réalisées en amont telle la préparation d'une pâte à meringue ni celles réalisées en aval telle la cuisson. Ces opérations font néanmoins partie intégrante du procédé de fabrication de la meringue.

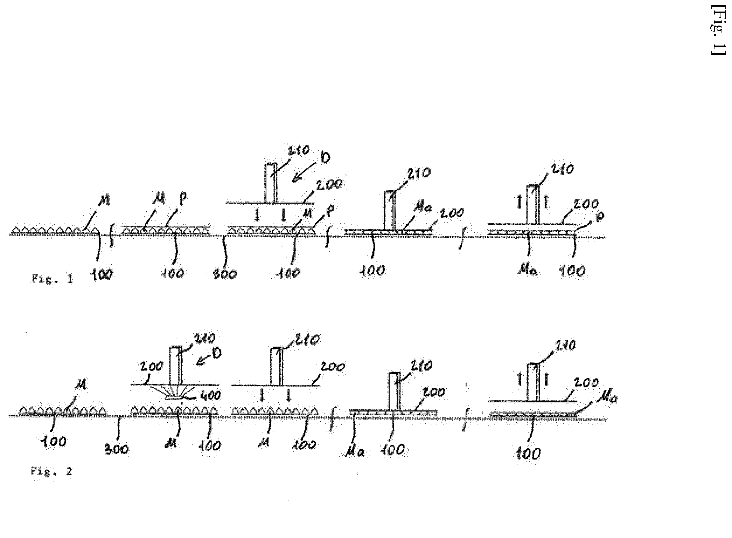

Comme illustrée sur le dessin de la figure 1, la pâte à meringue (préalablement fabriquée) est extrudée sur une tôle support inférieure 100. Les meringues crues M sont extrudées en forme de goutte. Une feuille de papier cuisson (non illustrée) peut avoir été posée préalablement sur la tôle support inférieure 100.

Comme illustrée, la forme de goutte définit que l'extrémité haute de la meringue M extrudée se rétrécit en pointe.

Conformément à l'invention, une feuille de papier cuisson P est posée sur les meringues crues extrudées M.

L'ensemble est ensuite disposé sous une tôle de pressage 200 mise en mouvement par un vérin vertical 210 par un moyen de convoyage 300. L'ensemble du dispositif référencé D forme un portique sous lequel vient se positionner les meringues crues M à aplatir.

La commande du vérin 210 assure le passage de la tôle de pressage 200 d'une position haute à une position basse et vice-versa. Une fois la position basse atteinte, les meringues sont des meringues crues aplaties Ma présentant une deuxième surface plane supérieure positionnée en vis-à-vis de celle déjà formée et constituant la base de la meringue Ma.

Une fois aplaties, la tôle de pressage remonte, le papier P est laissé sur les meringues crues Ma et l'ensemble formé de la tôle inférieure 100, des meringues crues aplaties Ma et du papier P, est soumis à l'opération de cuisson. Les meringues obtenues après cuisson présente deux surfaces planes lisses. Aucun nettoyage de la tôle de pressage n'est alors nécessaire pour la prochaine opération d'aplatissement. Deux nouvelles feuilles de papier de cuisson seront utilisées pour la tôle inférieure 100 et pour venir sur les meringues crues M avant pressage de la tôle supérieure 200.

Comme illustrée sur le dessin de la figure 2, la pâte à meringue (préalablement fabriquée) est extrudée sur une tôle support 100. Les meringues crues M sont extrudées en forme de goutte. Une feuille de papier cuisson (non illustrée) peut avoir été posée préalablement sur la tôle support inférieure 100. Comme illustrée, la forme de goutte définit que l'extrémité haute de la meringue M extrudée se rétrécit en pointe.

L'ensemble est ensuite disposé sous une tôle de pressage 200 mise en mouvement par un vérin vertical 210 par un moyen de convoyage 300. L'ensemble du dispositif référencé D forme un portique sous lequel vient se positionner les meringues crues M à aplatir.

Conformément à l'invention, de l'eau est pulvérisée au moyen d'un pulvérisateur 400 sur la surface inférieure de la tôle de pressage 200.

La commande du vérin 210 assure le passage de la tôle de pressage 200 d'une position haute à une position basse et vice-versa. Une fois la position basse atteinte, les meringues sont des meringues crues aplaties Ma présentant une deuxième surface plane supérieure positionnée en vis-à-vis de celle déjà formée et constituant la base de la meringue Ma.

Une fois aplaties, la tôle de pressage remonte et reste propre du fait de la présence d'eau ayant empêché l'adhésion de la pâte. L'ensemble formé des meringues crues aplaties Ma et de la tôle support inférieure 100 est soumis à l'opération de cuisson.

Les meringues obtenues après cuisson présentent deux surfaces planes lisses. Aucun nettoyage de la tôle de pressage n'est alors nécessaire pour la prochaine opération d'aplatissement.

On comprend que le procédé et le dispositif, qui viennent d'être ci-dessus décrits et représentés, l'ont été en vue d'une divulgation plutôt que d'une limitation. Bien entendu, divers aménagements, modifications et améliorations pourront être apportés aux exemples ci-dessus, sans pour autant sortir du cadre de l'invention.

## Revendications

1. Procédé de fabrication d'une meringue comprenant les opérations suivantes :
- préparation d'une pâte à meringue,
- extrusion des meringues crues (M) en forme de goutte sur une tôle support (100),
- cuisson des meringues,
**CARACTÉRISÉ EN CE QU'**il comprend avant cuisson, une opération d'aplatissement des meringues crues (M) extrudées au moyen d'une tôle de pressage (200) à des fins de création sur les meringues d'une surface plane supérieure.

2. Procédé selon la revendication 1, **CARACTÉRISÉ EN CE QU'**il consiste avant aplatissement, à intercaler un matériau antiadhésif entre la tôle de pressage (200) et les meringues crues (M) extrudées.

3. Procédé selon la revendication 2, **CARACTÉRISÉ EN CE QUE** le matériau intercalé est du papier dit de cuisson (P).

4. Procédé selon la revendication 2, **CARACTÉRISÉ EN CE QUE** le matériau intercalé est un film d'eau.

5. Procédé selon la revendication 3, **CARACTÉRISÉ EN CE QUE** lors de la cuisson, le papier dit de cuisson (P) est laissé en position sur les meringues crues aplaties (Ma).

6. Procédé selon la revendication 4, **CARACTÉRISÉ EN CE QUE** l'eau est pulvérisée directement sur la surface de la tôle de pressage (200) venant en contact avec les meringues crues (M) extrudées.

7. Procédé selon la revendication 4, **CARACTÉRISÉ EN CE QUE** l'eau est pulvérisée directement sur les meringues crues (M) extrudées.

8. Dispositif (D) permettant de mettre en œuvre un procédé de fabrication de meringue comprenant les opérations suivantes :
- préparation d'une pâte à meringue,
- extrusion des meringues crues (M) en forme de goutte sur une tôle support (100),
- cuisson des meringues,
**CARACTÉRISÉ PAR LE FAIT QU'**il adopte une architecture de presse comprenant une tôle de pressage (200) sous laquelle vient se positionner la tôle support (100) supportant des meringues crues (M) extrudées en goutte,
le dispositif (D) comprenant un moyen assurant la mise en mouvement de la tôle de pressage (200) vers la tôle support (100) à des fins d'aplatissement des meringues crues (M).

9. Dispositif (D) selon la revendication 8, **CARACTÉRISÉ PAR LE FAIT QU'**il comprend une zone de stockage de feuilles de papier cuisson (P) à usage unique prédécoupées, dimensionnées pour être disposées sur les meringues crues extrudées et s'interposer entre les meringues crues et la tôle de pressage (200).

10. Dispositif (D) selon la revendication 8, **CARACTÉRISÉ PAR LE FAIT QU'**il comprend un moyen de pulvérisation d'eau (400) orienté vers la surface inférieure de la tôle de pressage (200) pulvérisant l'eau sur ladite surface pour que le film d'eau créé vienne s'interposer entre les meringues crues et la tôle de pressage (200).

11. Dispositif (D) selon la revendication 8, **CARACTÉRISÉ PAR LE FAIT QU'**il comprend un moyen de pulvérisation d'eau (400) orienté vers les meringues crues (M) pulvérisant l'eau sur lesdites meringues crues pour que le film d'eau créé vienne s'interposer entre les meringues crues et la tôle de pressage (200).
